(19) 

**Europäisches Patentamt**
**European Patent Office**
**Office européen des brevets**

(11) **EP 4 601 182 A1**

(12) **EUROPEAN PATENT APPLICATION**

(43) Date of publication:
**13.08.2025 Bulletin 2025/33**

(51) International Patent Classification (IPC):
**H02P 1/26** (2006.01)       **H02P 29/60** (2016.01)

(21) Application number: **24305226.3**

(22) Date of filing: **12.02.2024**

(52) Cooperative Patent Classification (CPC):
**H02P 1/26; H02P 29/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Schneider Toshiba Inverter Europe
SAS**
**27120 Pacy-sur-Eure (FR)**

(72) Inventors:
 • **DEVOS, Thomas**
  **78955 CARRIERES SOUS POISSY (FR)**
 • **CLARKE, Phillip**
  **92600 ASNIERES SUR SEINE (FR)**
 • **TEULET, Frédéric**
  **37130 LANGEAIS (FR)**

(74) Representative: **Plasseraud IP**
 **104 Rue de Richelieu**
 **CS92104**
 **75080 Paris Cedex 02 (FR)**

(54) **METHOD OF MONITORING A STARTER, STARTER, AND COMPUTER READABLE STORAGE MEDIUM**

(57)       The disclosure presents a method of monitoring a starter ; the method comprising:
- determining (54) a duration of a first start and a current supplied to one winding of the electric motor during the initiation,
- computing (56) the limit theoretical thermal state of the electric motor based on the duration of the first start, on the current supplied to one winding of the electric motor during the first start and on electric motor parameters,
- determining (60) a current supplied to one winding of the electric motor,
- computing (62) a current thermal state based on the current determined and on said electric motor parameters,
- comparing (64) the current thermal state to the limit theoretical thermal state, if the current thermal state is greater than the limit theoretical thermal state, transmitting (68) a warning signal representative of a risk of tripping a motor thermal fault.

FIG. 2

EP 4 601 182 A1

## Description

### Field of the invention

This disclosure relates to a method of monitoring a starter, a soft starter and an On Line Direct starter.

### Background

An user may need to perform several consecutive starts of an electric motor for example at commissioning an installation or when there is problem on the electric network.

Since the level of current in the motor can be four times the nominal current of the electric motor, the electric motor warms up during the starting phase. To protect the motor against an overheat, a thermal probe can be mounted on the electric motor. A thermal relay or a software thermal protection application can also be installed on the starter.

The thermal protection application is based on a theoretical mathematical model which represents the evolution of electric motor heating. This theoretical model is defined by a standard referenced "IEC 60947". This standard was established to protect motors from overheating.

When a thermal protection application is implemented on the starter and several consecutive starts of the electric motor are carried out, the thermal protection application causes the tripping of a motor thermal fault which inhibits a new start until the electric motor is considered to be at acceptable temperature according to the standard IEC 60947. The user must then wait before initiating a new start. The length of the wait is not fixed. It depends on the protection class of the electric motor, of the initial temperature of the electric motor, of the ambient temperature, etc. If the user initiates a new start whereas the thermal protection application considers that the electric motor is too warm, the application generates a new motor thermal fault. In this case, the start fails but the electric motor is warmed up again by this start initialization so that the user will have to wait even longer to be able to start. Further, this start initialization can generate mechanical damages to the electric motor.

It is desirable to provide a service enabling the user to be warned that it is useless to initiate a new start since this new start will in any case result in a failure and will warm up the electric motor again. It would also be desirable to warn the user of the waiting time he must expect before being able to initiate a new start-up which will not generate a thermal fault. Finally, it would be desirable to inform the user of the number of consecutive starts that he will be able to carry out until the tripping of a thermal fault.

### Summary

An object of the present disclosure is to propose a method of monitoring a starter for preventing the user before the triggering of a motor thermal fault.

For reaching this object, the present disclosure presents a method of monitoring a starter, the starter being connected to an electric network and to an electric motor; the electric motor having at least one winding ;the starter comprising a processor and a motor thermal protection application configured to cause the tripping of a motor thermal fault when the electric motor reaches defined thermal conditions ; the method comprising:

a) initiating a first start of the electric motor,
b) determining a duration of the first start and a current supplied to one winding of the electric motor during the initiation of the first start,
c) computing the limit theoretical thermal state of the electric motor based on the duration of the first start, on the current supplied to one winding of the electric motor during the first start and on parameters of said electric motor,
d) determining a current supplied to one winding of the electric motor,
e) computing a current thermal state based on the current determined and on said electric motor parameters ,
f) comparing the current thermal state to the limit theoretical thermal state, if the current thermal state is greater than the limit theoretical thermal state, transmitting a warning signal representative of a risk of tripping a motor thermal fault.
Advantageously, this method is dependent from the motor thermal protection application which is based on the standard IEC 60947.

This method is very useful when the user proceeds some tests at commissioning an installation as he has a real view of time and number of start he can proceed.

This is a commissioning time saving feature.

Optionally, said electric motor parameters comprises the nominal current of the electric motor, a time constant, and an error threshold of the thermal state of the electric motor.

Optionally, if the current thermal state is lower than the limit theoretical thermal state , repeating steps d) to f).

Optionally, the transmission of the warning signal blocks an order of initiating a current start received by the starter.

Optionally, the method comprises computing a theoretical waiting time based on the theoretical limit thermal state, on the current thermal state and a on a time constant. Optionally, the method comprises displaying the theoretical waiting time on a displaying screen.

Optionally, the method comprises displaying a countdown timer on a displaying screen, the countdown timer being configured to count down from the theoretical waiting time until zero.

Optionally, when the current thermal state is lower than the limit theoretical thermal state, the method comprises computing a number of possible starts before the tripping of a motor thermal fault by the motor thermal protection application, the number of possible starts is computed based on the duration of the first start, on the current supplied to one winding of the electric motor during the first start, on said electric motor parameters and on the limit thermal state computed for n starts. Optionally, the method comprises displaying the number of possible starts on a displaying screen.

Optionally, the theoretical waiting time is recorded in a storage unit, if the starter has been turned off, the method comprising a calculation of a remaining waiting time when switching on the starter, the remaining waiting time taking into account the power off time.

Optionally,the defined thermal conditions causing the tripping of a motor thermal fault are based on the thermal protection class of the electric motor, on the nominal current of the electric motor and on settings based on the standard IEC 60947.

The present disclosure also presents a method of monitoring a starter, the starter being connected to an electric network and to an electric motor; the electric motor having at least one winding ;the starter comprising a processor and a motor thermal protection application configured to cause the tripping of a motor thermal fault when the electric motor reaches defined thermal conditions ; the method comprising:

a) initiating a start of the electric motor,
b) determining a current supplied to one winding of the electric motor,
c) computing a current thermal state based on the electric motor on the current determined during the start and on parameters of said electric motor,
d) comparing the current thermal state to the first thermal state, if the current thermal state is greater than the first thermal state, considering the current thermal state as being the preceding thermal state,
e) determining a current supplied to one winding of the electric motor,
f) computing a current thermal state based on the electric motor on the current determined during the start and on parameters of said electric motor,
g) comparing the current thermal state to the preceding thermal state, if the current thermal state is greater than the preceding thermal state, transmitting a warning signal representative of a risk of tripping a motor thermal fault.

The present disclosure also presents a computer readable storage medium comprising instructions which, when executed by a processor, cause the processor to carry out the method of any of the above claims.

The present disclosure also presents a starter comprising a processor comprising a storage unit storing parameters of the electric motor, the processor being adapted to implement the method according to any of the above claims.

Optionally, the stater is a soft starter or a On Line Direct starter.

**Brief description of the drawings**

[Fig. 1] is a schematic view of an example of an electric circuit comprising a soft starter according to the present disclosure.
[Fig. 2] is a flowchart of the monitoring method according to the present disclosure.
[Fig. 3] is an example of the evolution of the warm-up of an electric motor during six successive starts.

**Detailed description**

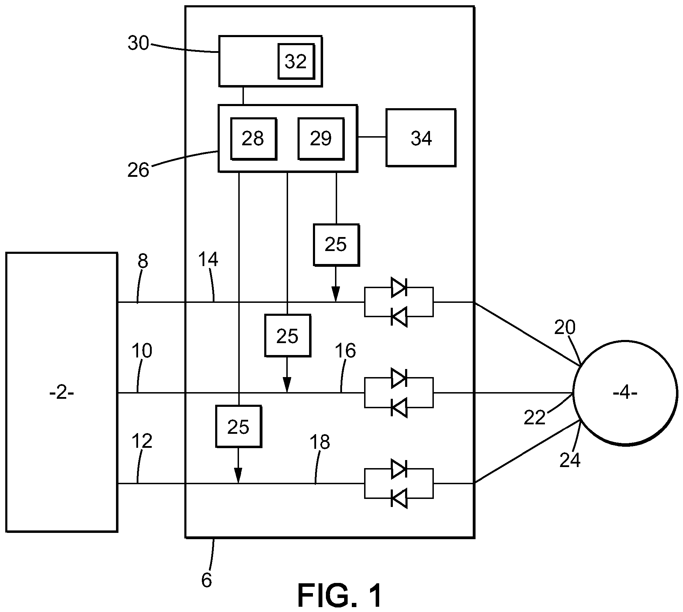

The disclosure applies to a method for monitoring a starter for starting an electric motor. An example of an electric circuit where the method could be applied is illustrated in figure 1.

The electric circuit of figure 1 comprises an electric network 2, an electric motor 4 connected to the electric network 2 and a motor soft-starter 6 connected between the electric network 2 and the electric motor 4.

The electric network 2 is configured to power the electric motor 4. In figure 1, the electric network 2 is a three-phases network designed to supply an electric signal, for example an alternating signal, in each of the windings of the electric motor. The electric network 2 comprises three electric network phases 8, 10 and 12 which are respectively connected to an arm of the motor soft-starter.

The soft-starter 6 comprises three arms 14, 16 and 18 adapted to be respectively connected to three windings 20, 22, 24 of the electric motor 4 in one side and to the three phases 8, 10 and 12 of the electric network on the other side.

Each arm 14, 16, 18 of the soft-starter comprises two thyristors in antiparallel configuration (head-to-tail) as illustrated by the figure 1 as defined in IEC 61148. An arm 14, 16, 18 of the soft-starter may be considered as a controlled switch between a phase 8, 10, 12 of the electric network and a respective winding 20, 22, 24 of the electric motor. That is, by controlling the thyristors of an arm 14, 16, 18 of the soft-starter, one may control an electric signal passing from a phase of the electric network to a respective winding of the electric motor.

In the embodiment illustrated in figure 1, the soft starter comprises also current determining devices 25 for measuring the instantaneous current in each arm of the starter. The instantaneous current determining devices 25 are, for example, ammeters. Alternatively, the soft starer comprises an input unit capable of receiving current values from an external current determining devices. Said external current determining device is configured to measure the instantaneous current in each phase of the electric network or in each winding of the electric motor.

In figure 1, the soft-starter comprises a processor 26, for example a controller or a microcontroller. The processor 26 may be configured to control the thyristors of each arm by controlling the supply of their respective gate with appropriate trigger pulses such that thyristors may switch from a blocking state to a passing state.

The processor 26 is configured to operate according to the method hereby described. The processor 26 may comprise electronic circuits for computation managed by an operating system.

The processor includes a timer 28 configured to measure the duration of a motor start. The processor may comprise a countdown timer 29.

The soft-starter may also comprise a non-transitory machine-readable or computer readable storage medium 30. The storage medium is encoded with instructions executable by a processor such as processor 26 to perform the example method hereby described.

A computer readable storage unit 30 according to this disclosure may be any electronic, magnetic, optical or other physical storage device that stores executable instructions. The computer readable storage unit may be, for example, Random Access Memory (RAM), an Electrically Erasable Programmable Read Only Memory (EEPROM), a storage drive, and optical disk, and the like.

The computer readable storage unit 30 may be encoded with a motor thermal protection application 32 configured, when executed by the processor, to cause the tripping of a motor thermal fault when the electric motor is in defined conditions. The motor thermal protection application 32 contains executable instructions. The aim of this motor thermal protection application 32 is to protect the electric motor of an overheat. The motor thermal protection application 32 is based on the standard IEC 60947.

This standard defines an error threshold $\theta_{error}$ and a theoretical mathematical model representative of the thermal evolution of the electric motor. The motor thermal protection application 32 will calculate this theoretical mathematical model at each start of the electric motor from data specific to the electric motor and data measured during each start. The data specific of the electric motor comprises the rms nominal current of the electric motor and the protection class of the electric motor. The data measured during each start comprises the duration of each start and the instantaneous current passing through an arm during a start.

Optionally, the soft starer 6 comprises a displaying screen 34 connected to the processor.

The motor thermal protection application will trip a motor thermal fault when the thermal state calculated from the theoretical mathematical model reaches the error threshold $\theta_{error}$ as defined by the standard.

The theoretical mathematical model representing the evolution of the thermal state of an electric motor as defined by the standard IEC 60947 is set by the following equation (1). This thermal model is a first order filter used on the square of the current ratio.

$$\tau \frac{d\theta(t)}{dt} + \theta(t) = \left(\frac{I_{RMS}}{I_n}\right)^2 \qquad (1)$$

Wherein $\theta(t)$ is the thermal state of the electric motor,

$I_n$ is the rms nominal current of the electric motor,

$I_{RMS}$ is the mean value of the rms current passing through each of the three arms of the starter during the start of the electric motor,

$\tau$ can be a thermal time constant of the copper or a thermal time constant of the iron. The thermal time constant of the copper $\tau_{Cu}$ is representative of the warming of the electric motor. The thermal time constant of the iron $\tau_{Fe}$ is

representative of the cooling of the electric motor. The thermal time constants depend on the motor protection class. The table below gives examples of time constants according to motor protection classes.

| Class | $\tau_{Cu}$ (s) | $\tau_{Fe}$ (s) |
|---|---|---|
| 2 | 36.2 | 148.9 |
| 10A | 89.8 | 436.9 |
| 10 | 178 | 741.9 |
| 15 | 267 | 1156 |
| 20 | 361 | 1573 |
| 25 | 452 | 1966 |
| 30 | 538 | 2457 |

For the first start of an electric motor, the thermal model defined by equation (1) can be written as:

$$\theta_1 = \theta_0 + \left(1 - e^{-\frac{t}{\tau}}\right)\left(I^2_{ratio} - \theta_0\right) \quad (2a)$$

with $I_{ratio} = \left(\frac{I_{RMS}}{I_n}\right)$ and $I_n$ and $I_{RMS}$ as defined in equation (1),

$\theta_1$ is the thermal state of the electric motor after one start. $\theta_1$ is computed at each sampling time of the processor 26.
$\theta_0$ is the initial thermal state of the electric motor, $\theta_0$ equals to zero at the first start.
t is the current time during the first start.

For the following starts of an electric motor, the thermal model defined by equation (1) can be written as:

$$\theta_{cur} = \theta_{prec} + \left(1 - e^{-\frac{tcur}{\tau}}\right)\left(I^2_{ratio} - \theta_{prec}\right) \quad (2b)$$

with $I_{ratio} = \left(\frac{I_{RMS}}{I_n}\right)$

$t_{cur}$ is the current time during the current start.
$\theta_{prec}$ is the preceding thermal state of the electric motor.
$\theta_{cur}$ is the current thermal state of the electric motor. The current thermal state
$\theta_{cur}$ is computed at each sampling time of the processor 26.

The current thermal state is also computed between two starts during the cooling of the electric motor.
For the present disclosure, we consider that all starts are identical. In particular, we consider that the duration of all starts are equals to the duration of the first start and that the current $I_{RMS}$ supplied to one winding of the electric motor during the initiation of all starts is the same as the current $I_{RMMSstart}$ supplied to one winding of the electric motor during the initiation of the first start. With these considerations, equation (1) can be written as below for the start which will causes the tripping of a motor thermal fault by the motor thermal protection application 32.

$$\theta_{error} = \theta_{lim} + \left(1 - e^{-\frac{\Delta t_{start}}{\tau}}\right)\left(I^2_{ratio} - \theta_{lim}\right) \quad (3)$$

Wherein

$\theta_{lim}$ is the limit thermal state ie the thermal state just before the start during which the thermal protection will trip a motor thermal fault.
$\theta_{error}$ is the error threshold of the thermal state at which the thermal protection will trip a motor thermal fault. The error threshold $\theta_{error}$ is defined in the standard IEC 60947.

$\Delta t_{start}$ is the duration of the first start of the electric motor.

$\tau$ can be the thermal time constant of the copper or the iron and chosen according to the protection class of the electric motor connected to the starter.

The method according to the present disclosure monitors the starter to warn the user just before tripping a motor thermal fault. The thermal state just before the thermal state which will cause the tripping of a motor thermal fault at next start of the motor is named limit theoretical thermal state and is referenced $\theta_{lim}$ in this patent application. This limit thermal state $\theta_{lim}$ is defined by the following equation (5). This equation (4) is obtained based on equation (3).

$$\theta_{lim} = \frac{\left(\theta_{error} - \left(1 - e^{-\frac{\Delta t_{start}}{\tau}}\right)(I_{ratio}^2)\right)}{e^{-\frac{\Delta t_{start}}{\tau}}} \tag{4}$$

Wherein:

$$I_{ratio} = \left(\frac{I_{RMSstart}}{I_n}\right)$$

$I_n$ is the rms nominal current of the electric motor,

$I_{RMSstart}$ is the mean value of the rms current passing through each of the three arms of the starter during the first start of the electric motor,

$\tau$ can be the thermal time constant of the copper or the iron and will be chosen according to the protection class of the electric motor.

$\theta_{error}$ is the error threshold of the thermal state defined in the standard IEC 60947. $\Delta t_{start}$ is the duration of the first start of the electric motor.

Thus, the limit theoretical thermal state $\theta_{lim}$ will be computed from data measured during the first start, from data depending on the electric motor such as its nominal current and its protection class and from data of the standard IEC 60947. When the computed current thermal state $\theta_{cur}$ will be greater than the limit thermal state $\theta_{lim}$, the motor thermal protection application 32 will trip a motor thermal fault.

Optionally, the method of the disclosure computes the number n of possible starts before the tripping of a motor thermal fault by the thermal protection application 32. This number n is defined by the following equation:

$$n = \frac{\tau}{\Delta t_{start}} \ln\left(\frac{\theta_{lim_n} - I_{ratio}^2}{\theta_{error} + \frac{e^{\Delta t_{start}}}{\tau} I_{ratio}^2}\right) \tag{5}$$

Wherein:

$$I_{ratio} = \left(\frac{I_{RMS}}{I_n}\right)$$ and $I_n$ and $I_{RMS}$ as defined in equation (1),

$I_n$ is the rms nominal current of the electric motor,

$I_{RMS}$ is the mean value of the rms current passing through each of the three arms of the starter during the start of the electric motor,

$\tau$ can be the thermal time constant of the copper or the iron and chosen according to the protection class of the electric motor.

$\theta_{error}$ is the error threshold of the thermal state defined in the standard IEC 60947. $\theta_{limn}$ is the limit thermal state for n consecutive starts.

With

$$\theta_{lim_n} = \theta_{error} e^{n\frac{\overline{\Delta t_{start}}}{\tau_{Cu}}} + \left(1 - e^{(n+1)\frac{\overline{\Delta t_{start}}}{\tau_{Cu}}}\right) I_{ratio}^2 \quad (6)$$

If the user does not take into account the warning signal, a motor thermal fault is tripped. The method according to the disclosure may estimate a theoretical waiting time $t_{lim}$ until the electric motor reaches a thermal state authorizing a restart.

This theoretical waiting time $t_{lim}$ can be obtained by the following equation:

$$t_{\lim} = -\tau \quad \ln\left(\frac{\theta_{lim}}{\theta cur}\right) \quad (6)$$

Wherein:

$\tau$ will be the thermal time constant of the copper or of the iron and will be chosen according to the protection class of the electric motor connected to the starter.

$\theta_{lim}$ is the limit thermal state ie the thermal state just before the start during which the thermal protection will trip a motor thermal fault.

$\theta_{cur}$ is the current thermal state of the electric motor.

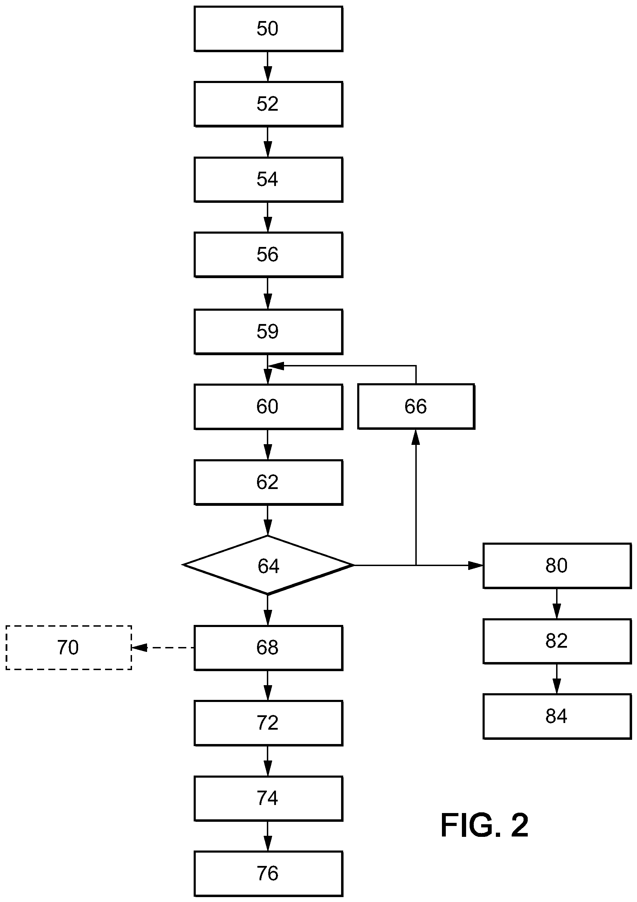

In reference to figure 2, the method of monitoring a starter begins with a preliminary phase 50 during which parameters P are saved in the storage unit 30. According to a first possibility, these parameters P comprise at least the rms nominal current In and the class of protection of the electric motor connected to the starter. Preferably, error thresholds $\theta_{error}$ thermal time constants $\tau_{Cu}$ of the copper and the thermal time constants $\tau_{Fe}$ of the iron are already registered in the storage unit 30 and the method is adapted to select the appropriate parameters according to the protection class of the electric motor.

According to a second possibility, during the preliminary phase 50, the user registers the rms nominal current In of the electric motor, the error threshold $\theta_{error}$ and the copper thermal time constant $\tau_{Cu}$ and the iron thermal time constant $\tau_{Fe}$ adapted to the protection class of its electric motor.

This preliminary phase 50 is done only once, for example the first time that the user connects its starter to the electric motor.

When the processor receives an order of initiating a first start of the electric motor, the starter initiates the first start in step 52. This order can be initiated by the user (pressing a button, send a start request via field bus or apply a signal on a digital input).

Then, the method comprises a step 54 of determining the duration $\Delta t_{start}$ of the first start and a current $I_{RMMSstart}$ supplied to one winding of the electric motor during the initiation of the first start. The duration may be measured by the processor timer 28.

In step 54, first the instantaneous current $I_{start}$ supplied to one winding of the electric motor during the initiation of the first start is measured. The instantaneous current $I_{start}$ may be measured by the current determining device 25. The processor 26 then computes the rms current $I_{RMSstart}$.

The current $I_{RMMSstart}$ may be a mean value of the rms current in each of the three arms of the starter and may for example correspond to:

$$I_{RMSstart} = \frac{I_{1rms} + I_{2rms} + I_{3rms}}{3}$$

Then, the method comprises a step 56 of computing a first thermal state $\theta_1$ of the electric motor. This first thermal state $\theta_1$ is computed based on equation (2a), on the parameters P registered in the storage unit 30, on the duration $\Delta t_{start}$ determined in step 54 and on the current $I_{RMSstart}$ determined in step 54 during the first start. The theoretical limit thermal state $\theta_{lim}$ is saved.

In step 59, an order of initiating a second start is received. The second start of the electric motor is then initiated. This second start as well as the following starts will be named "current start" in this disclosure.

In step 60, the current time $t_{cur}$ of the current start is determined. The current $I_{RMScur}$ supplied to one winding of the electric motor during the current start is also determined. The method described in step 54 is used for determining the current $I_{RMScur}$.

In step 62, a current thermal state $\theta_{cur}$ is computed based on equation (2b), on the current time $t_{cur}$, on the current $I_{RMScur}$ determined in step 60 during the current start, on the preceding thermal state $\theta_{prec}$ and on the parameters P stored in the storage unit 30.

During the second start, the preceding thermal state $\theta_{prec}$ is the thermal state computed for the first start.

In step 64, the current thermal state $\theta_{cur}$ is compared to the limit theoretical thermal state $\theta_{lim}$.

If the current thermal state $\theta_{cur}$ is lower than the limit theoretical thermal state $\theta_{lim}$, the processor considers that the current thermal state $\theta_{cur}$ is the preceding thermal state $\theta_{prec}$ during a step 66 and the method returns to step 60. During the third start, the preceding thermal state $\theta_{prec}$ is the thermal state computed for the second start etc. Steps 60 to 64 are repeated.

During these steps 60 to 64, the user may initiate a new start of the electric motor. If the current thermal state $\theta_{cur}$ is greater than the limit theoretical thermal state $\theta_{lim}$, a warning signal representative of a risk of tripping a motor thermal fault is transmitted by the processor in step 68.

Advantageously, thanks to the present method the warning signal is transmitted just before the initiation of a start which will cause the tripping of a motor thermal fault by the starter thermal protection application 32. So, the user knows that he should wait, before initiate a new start.

According to a first embodiment, the method comprises a start up blocking option. When this option is activated, if the processor 26 transmits the warning signal and after receives even so an order of initiating a new start, the processor 26 blocks the order in a step 70 and no further following start is initiated. Step 70 is drawn in dotted lines in Figure 2 because it is optional.

Advantageously, with this option, the user cannot initiate a new start after having received the warning signal. The start-up blocking option is optional.

According to a second embodiment, the method does not comprise a start-up blocking option. In this case, if the user receives the warning signal in step 68 and still initiates a new start in a step 72. The motor thermal protection application 32 trips a thermal fault.

The method may then comprise a step 74 of computing a theoretical waiting time $t_{lim}$. The theoretical waiting time $t_{lim}$ is the time that the user has to wait until the electric motor is at a sufficiently low temperature so that the warming generated by a new start will not cause the triggering of a thermal fault.

This waiting time $t_{lim}$ is computed based on equation (6), on the theoretical limit thermal state $\theta_{lim}$, on the current thermal state $\theta_{cur}$ and a on a time constant $\tau$. Optionally, the theoretical waiting time $t_{lim}$ may be computed with the iron time constant $\tau_{Fe}$ and with the copper time constant $\tau_{CU}$. Then, the two theoretical waiting times $t_{lim}$ are compared one with the other and the theoretical waiting times $t_{lim}$ is considered as being the theoretical waiting time $t_{lim}$

Then, the method comprises a step 76 of displaying the theoretical waiting time $t_{lim}$ on the screen.

Preferably, a countdown timer 29 is displayed on the displaying screen 34. The countdown timer is configured to count down from the theoretical waiting time $t_{lim}$ until zero.

Steps 74 to 76 are optional.

Optionally, when the current thermal state $\theta_{cur}$ is lower than the limit theoretical thermal state $\theta_{lim}$, the method may comprise a step 80 of computing a number n of possible starts before the tripping of a motor thermal fault by the motor thermal protection application 32. The number n of possible starts is computed based on equations (5) and (6), on the duration $\Delta t_{start}$ of the first start, on the rms current $I_{RMSstart}$ determined at step 54 during the first start, on the electric motor parameters P and on the limit thermal state ($\theta_{limn}$) computed for n starts.

Then, the method may comprise a step 82 of displaying the number n of possible starts on the displaying screen 34.

Finally, the theoretical waiting time $t_{lim}$ may be recorded in the storage unit 30 of the starter in a step 84. If the starter has been turned off, the method comprises a calculation of a remaining waiting time when switching on the starter. The remaining waiting time takes into account the power off time.

The method according to the present disclosure can also be implemented a On Line Direct starter as supplementary protection with respect to the thermal relay.

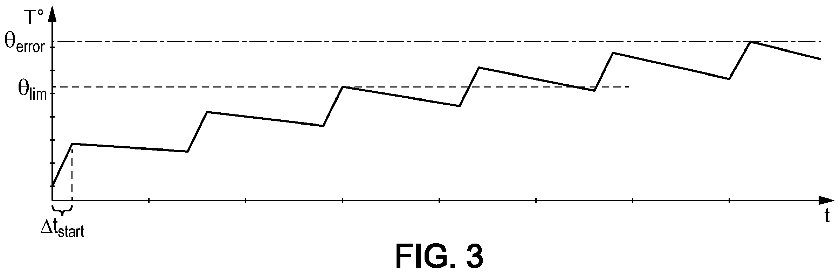

Figure 3 show an example of the thermal evolution of an electric motor in percent for acceleration of 20 seconds at 4 times the nominal current of the motor, with 120 seconds without motor current between two starts. The error threshold $\theta_{error}$ is at 125% for a motor of class 30. In this case, five starts have been performed without the triggering a motor thermal fault, but the sixth start trigs the motor thermal fault. The invention is applicable to a number of phases different than three.

Alternatively, the limite theoretical thermal state theta_lim can be calculated based on the data of the previous start (and no more the first one).

In this case, there is no change during the first start, the data (DeltaT_start, Irms, ...) are collected as previously.

So between the first and second start, theta_lim will be calculated and compared to Theta_curr as previously, but after the second start, theta_lim will be calculated based on data of the second start (and not the first one).

Before the n_th start, the limit threshold is calculated based on data of the preceding start and not the first one.

**Claims**

1. Method of monitoring a starter (6), the starter (6) being connected to an electric network (2) and to an electric motor (4); the electric motor having at least one winding (20,22,24); the starter comprising a processor (26) and a motor thermal protection application (32) configured to cause the tripping of a motor thermal fault when the electric motor (4) reaches defined thermal conditions; the method comprising:

   a) initiating (52) a first start of the electric motor,
   b) determining (54) a duration ($\Delta t_{start}$) of the first start and a current ($I_{RMSstart}$) supplied to one winding of the electric motor during the initiation of the first start,
   c) computing (56) the limit theoretical thermal state ($\theta_{lim}$) of the electric motor based on the duration ($\Delta t_{start}$) of the first start, on the current ($I_{RMSstart}$) supplied to one winding of the electric motor during the first start and on parameters (P) of said electric motor,
   d) determining (60) a current ($I_{RMScu}$) supplied to one winding of the electric motor,
   e) computing (62) a current thermal state ($\theta_{cur}$) based on the current ($I_{RMScur}$) determined and on said electric motor parameters (P),
   f) comparing (64) the current thermal state ($\theta_{cur}$) to the limit theoretical thermal state ($\theta_{lim}$), if the current thermal state ($\theta_{cur}$) is greater than the limit theoretical thermal state ($\theta_{lim}$), transmitting (68) a warning signal representative of a risk of tripping a motor thermal fault.

2. Method according to claim 1, wherein said electric motor parameters (P) comprises the nominal current (In) of the electric motor, a time constant ($\tau$), and an error threshold ($\theta_{error}$) of the thermal state of the electric motor.

3. Method according to any of the above claims, wherein if the current thermal state ($\theta_{cur}$) is lower than the limit theoretical thermal state ($\theta_{lim}$), repeating steps d) to f).

4. Method according to any of the above claims, wherein the transmission of the warning signal blocks (70) an order of initiating a current start received by the starter.

5. Method according to any of the claims 1 to 3, which comprises computing (74) a theoretical waiting time ($t_{lim}$) based on the theoretical limit thermal state ($\theta_{lim}$), on the current thermal state ($\theta_{cur}$) and a on a time constant ($\tau$).

6. Method according to claim 5, which comprises displaying (76) the theoretical waiting time ($t_{lim}$) on a displaying screen (34).

7. Method according to claim 5, which comprises displaying (76) a countdown timer (29) on a displaying screen (34), the countdown timer being configured to count down from the theoretical waiting time ($t_{lim}$) until zero.

8. Method according to any of claims 2 to 5, wherein when the current thermal state ($\theta_{cur}$) is lower than the limit theoretical thermal state ($\theta_{lim}$), the method comprises computing (80) a number (n) of possible starts before the tripping of a motor thermal fault by the motor thermal protection application, the number (n) of possible starts is computed based on the duration ($\Delta t_{start}$) of the first start, on the current ($I_{RMSstart}$) supplied to one winding of the electric motor during the first start, on said electric motor parameters (P) and on the limit thermal state ($\theta_{limn}$) computed for n starts.

9. Method according to any of claim 8, which comprises displaying (82) the number (n) of possible starts on a displaying screen (34).

10. Method according to claims 8 or 9, wherein the theoretical waiting time ($t_{lim}$) is recorded (84) in a storage unit (30), if the starter has been turned off, the method comprising a calculation of a remaining waiting time when switching on the starter, the remaining waiting time taking into account the power off time.

11. Method according to any of the above claims, wherein the defined thermal conditions causing the tripping of a motor thermal fault are based on the thermal protection class of the electric motor, on the nominal current (In) of the electric motor and on settings based on the standard IEC 60947.

12. Method of monitoring a starter (6), the starter (6) being connected to an electric network (2) and to an electric motor (4); the electric motor having at least one winding (20,22,24); the starter comprising a processor (26) and a motor thermal protection application (32) configured to cause the tripping of a motor thermal fault when the electric motor (4) reaches defined thermal conditions ; the method comprising:

a) initiating (59) a start of the electric motor,
b) determining (60) a current ($I_{RMScu}$) supplied to one winding of the electric motor,
c) computing (62) a current thermal state ($\theta_{cur}$) based on the electric motor on the current ($I_{RMSstart}$) determined during the start and on parameters (P) of said electric motor,
d) comparing (64) the current thermal state ($\theta_{cur}$) to the first thermal state ($\theta_{lim}$), if the current thermal state ($\theta_{cur}$) is greater than the first thermal state ($\theta_{lim}$), considering (66) the current thermal state ($\theta_{cur}$) as being the preceding thermal state ($\theta_{prec}$),
e) determining (60) a current ($I_{RMScu}$) supplied to one winding of the electric motor,
f) computing (62) a current thermal state ($\theta_{cur}$) based on the electric motor on the current ($I_{RMSstart}$) determined during the start and on parameters (P) of said electric motor,
g) comparing (64) the current thermal state ($\theta_{cur}$) to the preceding thermal state ($\theta_{lim}$), if the current thermal state ($\theta_{cur}$) is greater than the preceding thermal state ($\theta_{lim}$), transmitting (68) a warning signal representative of a risk of tripping a motor thermal fault.

13. A computer readable storage medium (30) comprising instructions which, when executed by a processor (26), cause the processor to carry out the method of any of the above claims.

14. Starter (6) comprising a processor comprising a storage unit (30) storing parameters (P) of the electric motor, the processor being adapted to implement the method according to any of the above claims.

15. Starter (6) according to claim 14, wherein the stater is a soft starter or a On Line Direct starter.

FIG. 1

```
┌──────────────┐
│      50      │
└──────┬───────┘
       ▼
┌──────────────┐
│      52      │
└──────┬───────┘
       ▼
┌──────────────┐
│      54      │
└──────┬───────┘
       ▼
┌──────────────┐
│      56      │
└──────┬───────┘
       ▼
┌──────────────┐
│      59      │
└──────┬───────┘
       ▼                    ┌──────────────┐
┌──────────────┐            │      66      │◄──┐
│      60      │            └──────┬───────┘   │
└──────┬───────┘                   ▲           │
       ▼                           │           │
┌──────────────┐                   │           │
│      62      │                   │           │
└──────┬───────┘                   │           │
       ▼                           │           │
      ╱╲                           │    ┌──────────────┐
     ╱  ╲                          │    │      80      │
    ╱ 64 ╲──────────────────────────────┤              │
    ╲    ╱                              └──────┬───────┘
     ╲  ╱                                      ▼
      ╲╱                                ┌──────────────┐
       ▼                                │      82      │
┌ ─ ─ ─ ─ ─ ┐   ┌──────────────┐        └──────┬───────┘
    70      ◄ ─ ┤      68      │               ▼
└ ─ ─ ─ ─ ─ ┘   └──────┬───────┘        ┌──────────────┐
                       ▼                │      84      │
                ┌──────────────┐        └──────────────┘
                │      72      │
                └──────┬───────┘
                       ▼
                ┌──────────────┐
                │      74      │             FIG. 2
                └──────┬───────┘
                       ▼
                ┌──────────────┐
                │      76      │
                └──────────────┘
```

FIG. 3

Europäisches
Patentamt

European
Patent Office

Office européen
des brevets

## EUROPEAN SEARCH REPORT

**Application Number**

EP 24 30 5226

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PINJIA ZHANG ET AL: "Impaired-Cooling-Condition Detection Using DC-Signal Injection for Soft-Starter-Connected Induction Motors", IEEE TRANSACTIONS ON INDUSTRIAL ELECTRONICS, IEEE SERVICE CENTER, PISCATAWAY, NJ, USA, vol. 56, no. 11, November 2009 (2009-11), pages 4642-4650, XP011268525, ISSN: 0278-0046, DOI: 10.1109/TIE.2009.2021588 | 1-3, 12-15 | INV. H02P1/26 H02P29/60 |
| Y | * paragraph [Abstract] * <br> * paragraph [Abstract] * <br> * page 1(4642), right-hand column, line 17 - line 21 * <br> * figures 6, 7 * <br> * figures 3, 4 * <br> * page 1(4642), left-hand column, last paragraph * <br> * page 7(4648), right-hand column, last paragraph * <br> * page 7(4648), right-hand column, paragraph first * <br> ----- | 4-11 | |
| Y | US 2021/167711 A1 (DEVOS THOMAS [FR] ET AL) 3 June 2021 (2021-06-03) <br> * paragraph [0194] * <br> * paragraph [0195] * <br> * paragraph [0100]; figure 1 * <br> * paragraph [0088] * <br> * paragraph [0200] * <br> ----- <br> -/-- | 4 | |

**TECHNICAL FIELDS SEARCHED (IPC)**

H02P

The present search report has been drawn up for all claims

| Place of search | Date of completion of the search | Examiner |
|---|---|---|
| Munich | 27 July 2024 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 601 182 A1**

Europäisches Patentamt

European Patent Office

Office européen des brevets

# EUROPEAN SEARCH REPORT

**Application Number**

EP 24 30 5226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PINJIA ZHANG ET AL: "Improving Thermal Recovery Time for Soft-Starter-Connected AC Motors With Intermittent Periodic Duty Cycles", IEEE TRANSACTIONS ON INDUSTRY APPLICATIONS, IEEE SERVICE CENTER, PISCATAWAY, NJ, US, vol. 46, no. 5, September 2010 (2010-09), pages 1927-1935, XP011313124, ISSN: 0093-9994 * page 3(1929), left-hand column, last paragraph - right-hand column, last paragraph; figure 2 * | 5-7 | |
| Y | CN 116 838 512 A (XCMG EXCAVATOR MACHINERY CO) 3 October 2023 (2023-10-03) * paragraph [0034] - paragraph [0035] * | 6,7 | |
| Y | ALBERS T ET AL: "Techniques in motor starting", PULP AND PAPER INDUSTRY TECHNICAL CONFERENCE, 2005. CONFERENCE RECORD OF 2005 ANNUAL JACKSONVILLE, FL, USA JUNE 30-23, 2005, PISCATAWAY, NJ, USA,IEEE, 30 June 2005 (2005-06-30), pages 43-57, XP010832020, ISBN: 978-0-7803-9089-8 * table 5 * | 8-10 | **TECHNICAL FIELDS SEARCHED (IPC)** |

-/--

The present search report has been drawn up for all claims

| Place of search | Date of completion of the search | Examiner |
|---|---|---|
| Munich | 27 July 2024 | Fligl, Stanislav |

EPO FORM 1503 03.82 (P04C01)

page 2 of 3

Europäisches
Patentamt

European
Patent Office

Office européen
des brevets

## EUROPEAN SEARCH REPORT

**Application Number**

EP 24 30 5226

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A Nonymous: "VLT HVAC Drive", , 31 December 2011 (2011-12-31), pages 1-40, XP055225605, Retrieved from the Internet: URL:http://www.danfoss.com/NR/rdonlyres/F0 5B1A0D-C20E-4758-A0C3-A038725F86EB/0/02_VL T_HVAC_Drive_SG.pdf [retrieved on 2015-11-03] * page 19, right-hand column, paragraph first * | 8-10 | |
| Y | ----- US 2007/013326 A1 (KLING SOREN [SE] ET AL) 18 January 2007 (2007-01-18) * paragraph [0023] * ----- | 11 | |
| | | | **TECHNICAL FIELDS SEARCHED (IPC)** |

The present search report has been drawn up for all claims

| Place of search | Date of completion of the search | Examiner |
|---|---|---|
| Munich | 27 July 2024 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 24 30 5226

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2024

| Patent document cited in search report | | Publication date | Patent family member(s) | | Publication date |
|---|---|---|---|---|---|
| US 2021167711 | A1 | 03-06-2021 | CN | 112910319 A | 04-06-2021 |
| | | | EP | 3832881 A1 | 09-06-2021 |
| | | | US | 2021167711 A1 | 03-06-2021 |
| CN 116838512 | A | 03-10-2023 | NONE | | |
| US 2007013326 | A1 | 18-01-2007 | CN | 1781242 A | 31-05-2006 |
| | | | EP | 1604450 A1 | 14-12-2005 |
| | | | US | 2007013326 A1 | 18-01-2007 |
| | | | WO | 2004079890 A1 | 16-09-2004 |

EPO FORM P0459

For more details about this annex : see Official Journal of the European Patent Office, No. 12/82